# EUROPEAN PATENT SPECIFICATION

(11) **EP 1 224 030 B1**
(45) Date of publication and mention of the grant of the patent: **03.12.2003**
(21) Application number: 00964787.6
(22) Date of filing: 18.09.2000
(51) Int. Cl.: B03B 5/10, B29B 17/02

(54) **METHOD OF SEPARATING PARTICLES IN A FLUID MEDIUM AND AN APPARATUS THEREFOR**
VERFAHREN ZUR TRENNUNG VON TEILCHEN IN EINEM FLÜSSIGEN MEDIUM UND VORRICHTUNG DAFÜR
PROCEDE DE SEPARATION DES PARTICULES DANS UN MILIEU FLUIDE ET APPAREIL AFFERENT

(30) Priority: 17.09.1999 NL 1013087; 12.05.2000 NL 1015168
(43) Date of publication of application: 24.07.2002
(73) Proprietor: Technische Universiteit Delft, 2628 BL Delft (NL)
(72) Inventor: REM, Peter, Carlo, NL-2288 AB Rijswijk (NL); FRAUNHOLCZ, Norbert, Otto, NL-2716 LL Zoetermeer (NL); DE BRUIJN, Arnoldus, Johannes, Matthijs, NL-2611 JB Delft (NL)
(74) Representative: Van Breda, Jacobus
(86) International application number: NL0000659
(87) International publication number: WO01021317

(56) References cited:
- DE-A- 4 304 726
- GB-A- 2 078 138
- US-A- 2 708 032
- US-A- 4 119 533
- US-A- 4 772 384
- US-A- 5 361 910

## Description

The present invention relates to a method of separating particles in a fluid medium having a density higher than that of the particles to be separated, whereby a mixture of the particles to be separated is fed to a separation chamber of a separation apparatus, and streams enriched in a particular type of particles are discharged from the separation chamber.

US 2,708,032 to Heyman discloses such a method to separate mica particles differing in surface-to-mass ratio (i.e. thickness). To perform the separation, a liquid containing mica flakes is introduced into a receptacle which is provided with a screen. Reciprocating the liquid causes thinner flakes to pass the screen, whereas thicker flakes are retained below the screen.

The object of the present invention is to provide a method wherein mixtures comprising different types of particles can be separated adequately.

To this end, the method according to the present invention is characterized in that the mixture of particles is subjected to a treatment comprising the step of moving the fluid medium up and down relative to the mixture of particles, whereby a barrier is present above the particles for restraining the particles.

Surprisingly it has been found that moving a mixture of particles having a density lower than that of the fluid medium up and down relative to said fluid medium (also known as "jigging") may effect stratification to achieve a separation. Jigging has been known for decades but not for the separation of particles having a density lower than that of the surrounding fluid medium. The mixture may comprise, for example, cork or wood. It may also be a mixture derived from domestic refuse. The barrier present for restraining the particles may be the face of the fluid medium. A stream enriched in particles of a particular type comprise the fluid medium and the particular particles. The separation according to the present invention will result in (at least) two streams: A first stream enriched in first particles having a density lower than that of the fluid, and a second stream enriched in second particles having a density lower than that of the fluid.

The use of a fluid medium for the separation of a mixture of particles in two or more fractions is generally known in the art. When the particles have a specific density lower than that of the fluid medium, such a separation is not very easy. It is known in the art to use centrifugation in order to increase the effect of the difference in density between the types of particles. This technique is expensive and often results in an unsatisfactory separation.

US 4,119,533 to Saitoh discloses a method of separating plastics having different densities. Heavier than water PVC is separated from polyolephines based on their difference in hydrophobicity. The separation of particles having a density lower than the surrounding fluid medium requires the addition of a facilitating compound (such as tannic acid). This allows the separation of polypropylene and polyethylene.

According to an important embodiment, the particles to be separated are plastic particles.

The separation of plastics is a very important application for which, indeed, currently a number of different techniques is available, but which all suffer from one or more important disadvantages. For example, it is known to separate particles electrostatically, (which method is very sensitive to the presence of humidity), measuring particles individually using infrared light, (which method is slow and expensive), performing a float-sink separation in a hydrocyclone or using water-air suspensions. The separation of plastics makes it possible to obtain higher grade plastics which can be used for the manufacture of new plastic products. In addition, the use of compatibilizers is substantially avoided or even unnecessary. This not only entails a savings in cost, but also the plastic product manufactured from the recycled material is of higher quality, and can be re-used more often.

According to an important embodiment, the plastic particles are polyolefines.

Using the method according to the present invention, a separation may be performed quickly and efficiently even with very similar plastics, such as polyethylene and polypropylene.

According to an important embodiment, the fluid medium is an aqueous medium, in particular water.

The use of aqueous media and in particular water, which are very cheap fluid media, does not result in contamination of the streams enriched in a particular type of particles and do not discharge volatile organic compounds (or just to a reduced extent). When using an aqueous medium such as water for the separation of plastics, care should be taken that the particles are well wetted by the fluid medium in order to prevent adherence of air bubbles (which cause a false change in the density of the particle). This may be accomplished using friction-washing with the fluid medium or by adding low concentrations of surfactants. It is also possible to perform the method under elevated pressure (as a result of which any air bubbles present dissolve), or under reduced pressure (resulting in larger air bubbles which can more easily escape, after which the method is preferably again performed at ambient pressure).

According to an important embodiment, the aqueous medium has a temperature of about 0°C.

At this temperature the ratio of the densities of plastics to be separated, such as polyethylene and polypropylene, is maximal.

According to an important embodiment, separate discharge-facilitating particles are present in the fluid medium.

The presence of facilitating particles may be of particular importance when the composition of the mixture varies. By placing a partition substantially in the middle of the layer of the facilitating particles, the achievement of an optimal separation may be ensured. The facilitating particles may be separated from a stream enriched with a particular type of particles by any suitable means, such as the use of magnetism if the facilitating particles are ferromagnetic. Of course, facilitating particles recovered will be fed back into the separation chamber.

In this manner the separation of two types of particles may be optimised. It is also conceivable that more layers of facilitating particles are formed between (for example three) different types of particles.

Preferably the facilitating particles are bulky particles having a density between the densities of the streams enriched in particular particles.

This embodiment is very advantageous when the particles to be separated are flakes. The bulky particles will experience an effective density of its surrounding determined by both the density of the fluid medium and the particles present. The different shape of the particles to be separated on the one hand and the facilitating particles on the other, makes it very easy to separate the facilitating particles from a stream enriched in a particular type of particle. The bulky facilitating particles may have a largest size similar to that of the largest particles to be separated, but its thickness will be significantly more than that of the particles to be separated, such as at least five times more. Advantageously the bulky particles are, for example, approximately spherical particles, cylindrical particles or polygonal bodies such as cubes etc.

Preferably an element provided in the separation chamber is used as the barrier for restraining the particles in the separation chamber.

Such an element makes it easy to generate the up and down moving flow of fluid medium while causing a minimal disturbance of particle layers already partially separated.

Preferably the element for restraining the particles comprises passages for the passage of the fluid medium.

As such an element a sieve or grating is suitable, the openings of which will suitably, be smaller than the smallest particles of the mixture.

Preferably the element is at an angle with the horizontal, preferably at an angle between 2-45°, and more preferably between 5-30°, 5-20° being most preferred, such that the particles are transported away from the supply opening. This aids in the transport of the particle layers in the separation chamber.

The invention also relates to an apparatus suitable for separating particles having a density lower than that of a fluid medium, wherein the apparatus comprises
- a separation chamber having a supply opening for particles to be separated;
- discharge openings for separated fractions of particles;
- an element possessing passages provided above the supply opening, the element defining a first portion of the separation chamber and a second portion of the separation chamber;
- means for moving a fluid medium up and down relative to the particles to be separated.

Such a device is disclosed in US 2,708,302, as discussed above.

According to the invention, the element is a particles restraining element, and supply opening and the discharge openings are in direct communication with each other via the first portion.

Using such an apparatus makes it possible to achieve an efficient separation of the particles having a density lower than that of the fluid medium in a cheap and simple manner. The element and the means for moving the fluid medium up and down may be the same, that is a sieve (or screen).

According to a preferred embodiment, the element is provided at an angle with the horizontal, preferably at an angle between 2-45°, more preferably between 5-30°, 5-20° being most preferred, such that the particles are transported away from the place where they are supplied.

A second apparatus according to the invention is an apparatus suitable for separating particles having a density lower than that of a fluid medium, wherein the apparatus comprises
- a separation chamber having a supply opening for particles to be separated;
- discharge openings for separated fractions of particles;
- an element possessing passages provided above the supply opening, the element defining a first portion of the separation chamber and a second portion of the separation chamber;
- means for moving a fluid medium up and down relative to the particles to be separated.

The apparatus is characterized in that the element has a first section with first passages and a second section with second passages, the first passages being smaller than the second passages, the first section being a particles restraining element, a supply opening and a first discharge opening being in direct communication with each other via the first portion, the supply opening and a second discharge opening being in communication with each other via the first portion, the second section and the second portion.

Again, according to a preferred embodiment, the element is provided at an angle with the horizontal, preferably an angle between 2 - 45°, more preferable between 5 - 30.

The invention also relates to a third apparatus suitable for separating particles having a density lower than that of a fluid medium the apparatus comprises
- a separation chamber having a supply opening for the particles to be separated;
- an element provided above the supply opening, said element comprising a multitude of openings allowing the passage of said particles; and
means provided to move the fluid medium up and down relative to the particles to be separated.

This apparatus is characterized in that said supply opening extends in a substantially radial direction and second means are provided to rotate the element relative to fluid medium in the separation chamber.

In operation, the mixture of particles to be separated will be supplied below facilitating particles. The element and the fluid medium may be rotated at the same speed (and in the same direction), allowing a very simple separation operation. The particles with higher density which do not pass the barrier consisting of the facilitating particles may be removed from the separation chamber, for example together with the facilitating particles. The facilitating particles can be separated from the particles with higher density by any conventional method, such as separation by size, using magnetic fields etc.

According to an interesting embodiment, the apparatus comprises means for locally disturbing a mass comprising added particles not capable of passing through the openings of said element and particular particles separated from particles which have passed through said openings of said element.

Thus it is possible to use the element to separate the facilitating particles from the particles having higher density. The means may comprise a pipe provided with a slit or number of nozzles from which fluid medium is ejected.

The invention also relates to a specific method of separating particles in a fluid medium having a density higher than that of the particles to be separated, wherein an apparatus according to claim 16 is used, a mixture of particles to be separated is supplied below a layer of particles having a thickness which doesn't allow them to pass through the openings of the element, the fluid medium in the separation chamber is rotated relative to the element, the element is moved up and down to move the fluid medium relative to the particles to be separated, causing particles with lower density to pass through the facilitating particles and through the openings in said element to end up in fluid medium above said element from which the particles are discharged from the separation chamber, whereas the facilitating particles act as a barrier for and restrain the particles with higher density, which particles with higher density are discharged from the separation in the fluid medium below said element.

Preferably, the fluid medium is rotated with respect to the wall of the separation chamber.

According to an alternative method of separating particles in a fluid medium having a density higher than that of the particles to be separated, an apparatus according to claim 17 is used, a mixture of particles to be separated is supplied below a layer of particles having a thickness which doesn't allow them to pass through the openings of the element, the fluid medium in the separation chamber is rotated relative to the element, the element is moved up and down to move the fluid medium relative to the particles to be separated, causing particles with lower density to pass through the facilitating particles and through the openings in said element to end up in a first section comprising fluid medium above said element from which first section the particles are discharged from the separation chamber, whereas the facilitating particles act as a barrier for and restrain the particles with higher density, the means for locally disturbing the mass of facilitating particles and restrained particles with higher density, allowing said particles with higher density to pass through the openings in said element to end up in a second section above the element separated from the first section and discharging a stream enriched in particles having a higher density from the separation chamber.

The present invention will now be illustrated with reference to a drawing and an exemplary embodiment wherein
Fig. 1 depicts a schematic representation of an apparatus according to the invention;
Figs. 2a - d each show a picture of four successive points in time during the separation of particles using the method according to the invention;
Fig. 3 depicts a first alternative schematic representation of an apparatus according to the invention; and
Fig. 4 depicts a second alternative schematic representation of an apparatus according to the invention.

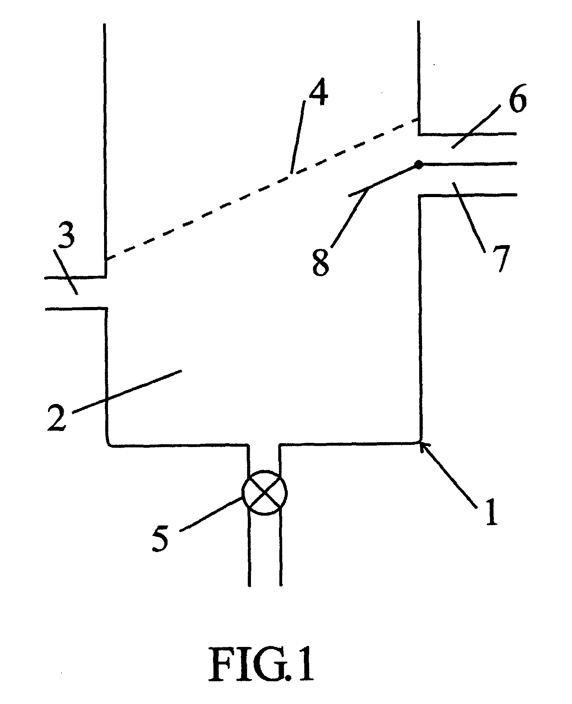

The apparatus 1 shown in Fig. 1 possesses a chamber 2 provided with a supply opening 3 through which a mixture of particles to be separated can be supplied. Above the supply opening 3 a sieve 4 is mounted, the lowest part of the sieve 4 being adjacent to the supply opening 3. In operation, a fluid medium is present in separation chamber 2, which fluid can be moved up and down using a pump 5. For the discharge of separated particles two discharge openings 6, 7 are provided as well as a partition 8 for separating the particle layers. This partition 8 is preferably rotatable, making it easier to subject a mixture in which the ratio of the type of particles varies, to a separation.

It has been found that it is advantageous to increase the resistance with which the fluid medium may flow though the passages of the sieve 4. This may be achieved, for example, by putting a layer of pebbles on top of the sieve 4.

If necessary, the mixture of particles to be separated is first subjected to a separation according to particle size, but the method according to the present invention is, in case of flake-shaped particles to be separated, surprisingly insensitive to the diversity of particle size in the mixture.

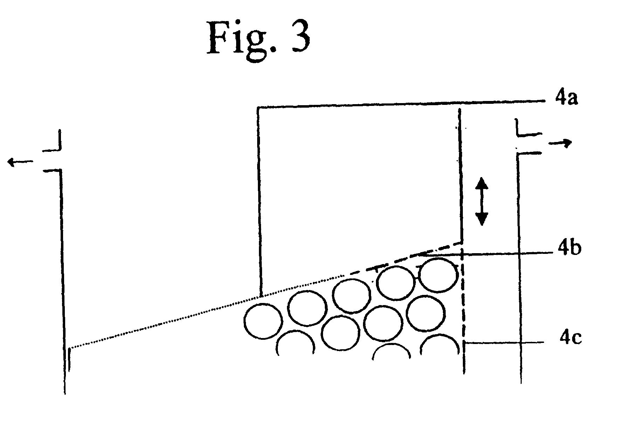

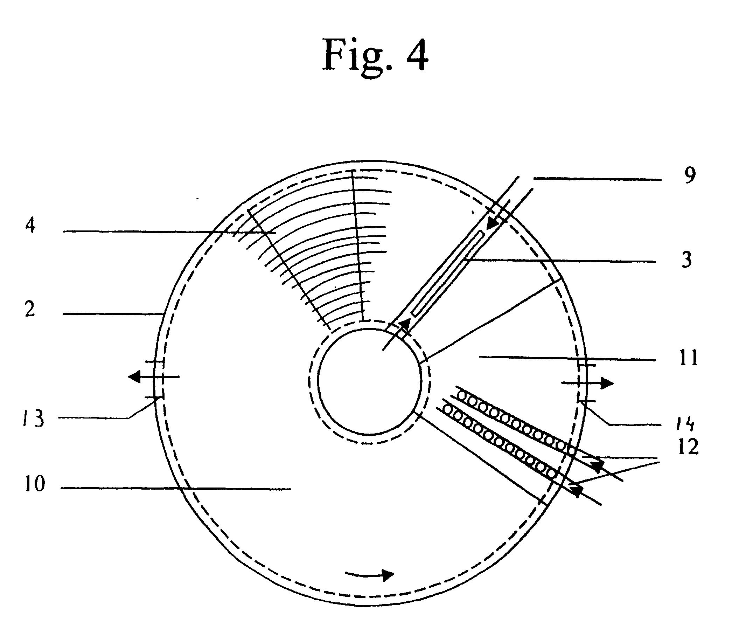

According to a very interesting embodiment particles to facilitate/separate discharge of different particles are present. According to a first embodiment, these particles will facilitate the division into separate streams of layers comprising a particular type of particle resulting from the separation. A partition can be placed in the layer of facilitating particles. This is much easier than determining the border between two layers comprising different particles. According to a second embodiment, the use of facilitating particles makes it possible to use a barrier having openings allowing the passage of the particles to be separated. For example and as schematically depicted in Fig. 3, the openings in sieve section 4a do not allow for the passage of particles. The screen section 4b allows for the passage of lower-density particles (which are discharged from the separation chamber 2 through outlet 13 shown in fig. 4), whereas higher-density particles, which are not capable of penetrating the layer of facilitating particles, will pass through openings in sieve section 4c and are discharged from the separation chamber 2 through outlet 14 (shown in fig. 4).

The apparatus shown in fig. 4 (top view) comprises a circular screen 4 (shown in part) which retains facilitating particles having density chosen such that they end up between particles having a relative low density and particles having a relative high density. The mixture of particles to be separated is supplied in a substantially radial direction through a supply tube 9 having a slit-like supply opening 3 or a multitude of supply openings 3 distributed over a substantial part of the length of the supply tube 9. Both the screen 4 and the fluid medium in the separation chamber 2 are rotated counter-clockwise. This may be accomplished using a water jet. According to an alternative embodiment, the rotating screen 4 causes the fluid medium to rotate. To avoid a detrimental effect because of turbulence near the wall of the separation chamber, the screen 4 may be provided with circumferential, downward extending wall (not shown, but similar to fig. 3 near supply opening 3), the wall having a height larger than the length of stroke during operation.

In operation, particles having a lower density will pass through the layer of facilitating particles and through openings in the screen 4. A stream comprising fluid medium and particles having a lower density may be discharged from the separation chamber 2 from above the screen 4. The facilitating particles act as a barrier for the particles having a relatively higher density. The latter particles may be removed from below the screen 4 together with (a part of) the facilitating particles. Any facilitating particles present in a stream enriched in particles having a higher density may be separated using any conventional means, and will be fed back into the separation chamber 2 below the screen 4.

Alternatively, the screen 4 may be used to separate the denser particles from the facilitating particles by disturbing the strata (facilitating particles and denser particles). This may be easily achieved using pipes 12 provided with nozzles which supply fluid medium to disturb the subtle balance in the strata, causing the denser particles to go through the screen 4. In this case, two separate sections 10, 11 are provided above the screen 4. Both sections 10, 11 may move up and down together with the screen, but do not rotate. The first section 10 is used to collect particles having a lower density, the second section 11 is used to collect particles having a higher density.

### Example 1

A mixture was prepared of 0.8 kg HDPE (white: density 945 kg/m³) and 0.2 kg PP (blue, density 900 kg/m³). The grain size of both types of plastic was 1.7 - 4 mm. The apparatus used had a separation chamber with a volume of 3.1 litre and a diameter of 19 cm. Water was used as the fluid medium. To separate, the water was moved up during 1 second and down during 3 seconds in an asymmetric sinusoidal manner. The length of stroke was 9 cm. The stationary screen had passages of 0.5 mm square, with 100 passages per cm².

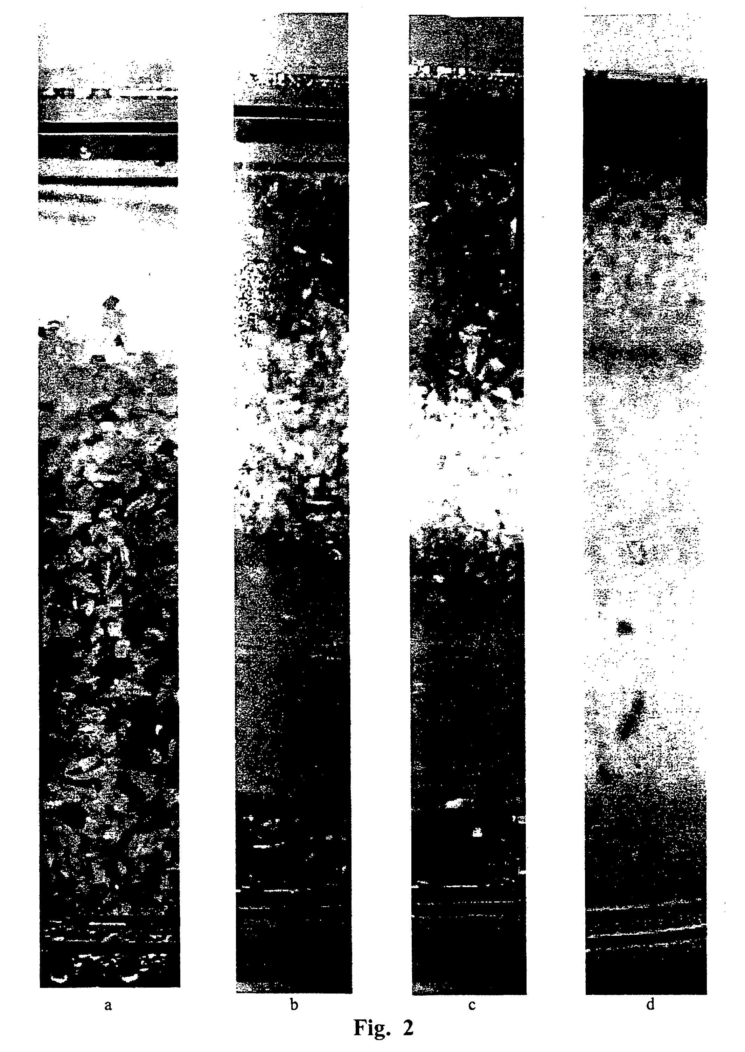

Fig. 2 shows that despite the small difference in density a separation can be achieved very quickly. The pictures a - d were taken within a timespan of 2 min.

### Example 2

In this experiment, an apparatus as depicted in fig. 3 was used having a sieve 4 made of bars providing slit-like openings (width 6 mm, length several cm). Facilitating particles were used having a density of 970 kg/ m³, a length of 8-12 mm, a diameter of 8 mm and in an amount equivalent to two layers, to separate flakes of PP (density approximately 900 kg/ m³) and HDPE (density approximately 950 kg/m³). Conditions: frequency 10/minute; length of stroke: 45 mm; screen section 4a 300 mm, screen section 4b 50 mm. Screen width: 200 mm. Separation occurs in a period of 1-2 minutes. The PE obtained was almost pure (less than 1% PP). PP still comprised about 10% PE, which is still a significant improvement over the original 50/50.

## Claims

1. Method of separating particles in a fluid medium having a density higher than that of the particles to be separated, whereby a mixture of the particles to be separated is fed to a separation chamber of a separation apparatus, and streams enriched in a particular type of particles are discharged from the separation chamber, **characterized in that** the mixture of particles is subjected to a treatment comprising the step of moving the fluid medium up and down relative to the mixture of particles, whereby a barrier is present above the particles for restraining the particles.

2. Method according to claim 1, **characterized in that** the particles to be separated are plastic particles.

3. Method according to claim 2, **characterized in that** the plastic particles to be separated are polyolefines.

4. Method according to any of the preceding claims, **characterized in that** the fluid medium is an aqueous medium.

5. Method according to claim 4, **characterized in that** the aqueous medium is water.

6. Method according to claim 4 or 5, **characterized in that** the aqueous medium has a temperature of about 0°C.

7. Method according to any of the preceding claims, **characterized in that** separate discharge-facilitating particles are present in the fluid medium.

8. Method according to claim 7, **characterized in that** facilitating particles are bulky particles having a density between the densities of the streams enriched in particular particles.

9. Method according to any of the preceding claims, **characterized in that** the barrier for restraining the particles is an element provided in the separation chamber.

10. Method according to any of the preceding claims, **characterized in that** the element for restraining the particles comprises passages for the passage of the fluid medium.

11. Method according to any of the preceding claims, **characterized in that** the element is provided at an angle with the horizontal, preferably at an angle between 2 - 45°, more preferably between 5 - 30° such that the particles are transported away from the place of supply.

12. Apparatus suitable for separating particles having a density lower than that of a fluid medium, wherein the apparatus comprises
- a separation chamber (1) having a supply opening (3) for particles to be separated;
- discharge openings (6,7) for separated fractions of particles;
- an element (4) possessing passages provided above the supply opening, the element defining a first portion of the separation chamber and a second portion of the separation chamber;
- means (5) for moving a fluid medium up and down relative to the particles to be separated,
**characterized in that** the element (4) is a particles restraining element, and supply opening (3) and the discharge openings (6,7) are in direct communication with each other via the first portion.

13. Apparatus according to claim 12, **characterized in that** the element is provided at an angle with the horizontal, preferably an angle between 2 - 45°, more preferable between 5 - 30.

14. Apparatus suitable for separating particles having a density lower than that of a fluid medium, wherein the apparatus comprises
- a separation chamber (1) having a supply opening (3) for particles to be separated;
- discharge openings for separated fractions of particles;
- an element (4) possessing passages provided above the supply opening, the element defining a first portion of the separation chamber and a second portion of the separation chamber;
- means (5) for moving a fluid medium up and down relative to the particles to be separated,
**characterized in that** the element (4) has a first section (4a) with first passages and a second section (4b) with second passages, the first passages being smaller than the second passages, the first section being a particles restraining element, a supply opening and a first discharge opening being in direct communication with each other via the first portion, the supply opening and a second discharge opening being in communication with each other via the first portion, the second section and the second portion.

15. Apparatus according to claim 14, **characterized in that** the element is provided at an angle with the horizontal, preferably an angle between 2 - 45°, more preferable between 5 - 30.

16. Apparatus suitable for separating particles having a density lower than that of a fluid medium the apparatus comprises
- a separation chamber (1) having a supply opening (3) for the particles to be separated;
- an element (4) provided above the supply opening, said element comprising a multitude of openings allowing the passage of said particles; and
- means (5) provided to move the fluid medium up and down relative to the particles to be separated,
**characterized in that** said supply opening (3) extends in a substantially radial direction and second means are provided to rotate the element relative to fluid medium in the separation chamber.

17. Apparatus according to claim 16, **characterized in that** it comprises means (12) for locally disturbing a mass comprising added particles not capable of passing through the openings of said element and particular particles separated from particles which have passed through said openings of said element.

18. Method of separating particles in a fluid medium having a density higher than that of the particles to be separated, **characterized in that** an apparatus according to claim 16 is used, a mixture of particles to be separated is supplied below a layer of particles having a thickness which doesn't allow them to pass through the openings of the element, the fluid medium in the separation chamber is rotated relative to the element, the element is moved up and down to move the fluid medium relative to the particles to be separated, causing particles with lower density to pass through the facilitating particles and through the openings in said element to end up in fluid medium above said element from which the particles are discharged from the separation chamber, whereas the facilitating particles act as a barrier for and restrain the particles with higher density, which particles with higher density are discharged from the separation in the fluid medium below said element.

19. Method according to claim 18, **characterized in that** the fluid medium is rotated with respect to the wall of the separation chamber.

20. Method of separating particles in a fluid medium having a density higher than that of the particles to be separated, **characterized in that** an apparatus according to claim 17 is used, a mixture of particles to be separated is supplied below a layer of particles having a thickness which doesn't allow them to pass through the openings of the element, the fluid medium in the separation chamber is rotated relative to the element, the element is moved up and down to move the fluid medium relative to the particles to be separated, causing particles with lower density to pass through the facilitating particles and through the openings in said element to end up in a first section comprising fluid medium above said element from which first section the particles are discharged from the separation chamber, whereas the facilitating particles act as a barrier for and restrain the particles with higher density, the means for locally disturbing the mass of facilitating particles and restrained particles with higher density, allowing said particles with higher density to pass through the openings in said element to end up in a second section above the element separated from the first section and discharging a stream enriched in particles having a higher density from the separation chamber.

## Patentansprüche

1. Verfahren zum Abtrennen von Teilchen in einem fluiden Medium, das eine Dichte hat, die größer ist als die der abzutrennenden Teilchen, wobei ein Gemisch der abzutrennenden Teilchen einer Abtrennkammer einer Abtrennvorrichtung zugeführt wird und aus der Abtrennkammer mit einer speziellen Art von Teilchen angereicherte Ströme abgeführt werden, **dadurch gekennzeichnet, dass** das Gemisch von Teilchen einer Behandlung unterworfen wird, die den Schritt aufweist, das fluide Medium bezüglich des Gemisches von Teilchen nach oben und unten zu bewegen, wodurch über den Teilchen zum Zurückhalten der Teilchen eine Sperre vorhanden ist.

2. Verfahren nach Anspruch 1, **dadurch gekennzeichnet, dass** die abzutrennenden Teilchen Kunststoffteilchen sind.

3. Verfahren nach Anspruch 2, **dadurch gekennzeichnet, dass** die abzutrennenden Kunststoffteilchen Polyolefine sind.

4. Verfahren nach einem der vorhergehenden Ansprüche, **dadurch gekennzeichnet, dass** das fluide Medium ein wässriges Medium ist.

5. Verfahren nach Anspruch 4, **dadurch gekennzeichnet, dass** das wässrige Medium Wasser ist.

6. Verfahren nach Anspruch 4 oder 5, **dadurch gekennzeichnet, dass** das wässrige Medium eine Temperatur von etwa 0°C hat.

7. Verfahren nach einem der vorhergehenden Ansprüche, **dadurch gekennzeichnet, dass** in dem fluiden Medium gesonderte, das Abführen erleichternde Teilchen vorhanden sind.

8. Verfahren nach Anspruch 7, **dadurch gekennzeichnet, dass** die erleichternden Teilchen voluminöse Teilchen mit einer Dichte zwischen den Dichten der mit speziellen Teilchen angereicherten Strömen sind.

9. Verfahren nach einem der vorhergehenden Ansprüche, **dadurch gekennzeichnet, dass** die Sperre für das Zurückhalten der Teilchen ein Element ist, das in der Abtrennkammer vorgesehen ist.

10. Verfahren nach einem der vorhergehenden Ansprüche, **dadurch gekennzeichnet, dass** das Element zum Zurückhalten der Teilchen Durchlässe für den Durchgang des fluiden Mediums aufweist.

11. Verfahren nach einem der vorhergehenden Ansprüche, **dadurch gekennzeichnet, dass** das Element in einem Winkel mit der Horizontalen, vorzugsweise in einem Winkel zwischen zwei bis 42°, besonders bevorzugt zwischen 5 bis 30° so vorgesehen ist, dass die Teilchen von der Stelle der Zuführung wegtransportiert werden.

12. Vorrichtung, die zum Abtrennen von Teilchen geeignet ist, die eine Dichte haben, die kleiner ist, als die eines fluiden Mediums, wobei die Vorrichtung
- eine Abtrennkammer (1) mit einer Zuführöffnung (3) für die abzutrennenden Teilchen,
- Abführöffnungen (6, 7) für abgetrennte Teilchenfraktionen,
- ein Element (4), das Durchlässe besitzt, die über der Zuführöffnung vorgesehen sind, wobei das Element einen ersten Teil der Abtrennkammer und einen zweiten Teil der Abtrennkammer begrenzt, und
- Einrichtungen (5) zum Bewegen eines fluiden Mediums bezüglich der abzutrennenden Teilchen nach oben und nach unten aufweist,
**dadurch gekennzeichnet,**
- **dass** das Element (4) ein Teilchen zurückhaltendes Element ist, und
- **dass** die Zuführöffnung (3) und die Abführöffnungen (6, 7) in einer direkten Verbindung miteinander über den ersten Teil stehen.

13. Vorrichtung nach Anspruch 12, **dadurch gekennzeichnet, dass** das Element in einem Winkel mit der Horizontalen, vorzugsweise in einem Winkel zwischen 2 bis 45°, besonders bevorzugt zwischen 5 bis 30°, vorgesehen ist.

14. Vorrichtung, die für das Abtrennen von Teilchen geeignet ist, die eine Dichte haben, die kleiner ist als die eines fluiden Mediums, wobei die Vorrichtung
- eine Abtrennkammer (1 ) mit einer Zuführöffnung (3) für die abzutrennenden Teilchen,
- Abführöffnungen für abgetrennte Teilchenfraktionen,
- ein Element (4), das Durchlässe aufweist, die über der Zurühröffnung vorgesehen sind, wobei das Element einen ersten Teil der Abtrennkammer und einen zweiten Teil der Abtrennkammer begrenzt, und
- Einrichtungen (5) zum Bewegen eines fluiden Mediums bezogen auf die abzutrennenden Teilchen nach oben und nach unten aufweist,
**dadurch gekennzeichnet,**
- **dass** das Element (4) einen ersten Abschnitt (4a) mit ersten Durchlässen und einen zweiten Abschnitt (4b) mit zweiten Durchlässen hat,
- wobei die ersten Durchlässe kleiner als die zweiten Durchlässe sind, und
- wobei der erste Abschnitt ein Teilchen zurückhaltendes Element ist,
- **dass** eine Zuführöffnung und eine erste Abführöffnung in direkter Verbindung miteinander über den ersten Teil stehen, und
- **dass** die Zuführöffnung und eine zweite Abführöffnung in Verbindung miteinander über den ersten Teil, den zweiten Abschnitt und den zweiten Teil stehen.

15. Vorrichtung nach Anspruch 14, **dadurch gekennzeichnet, dass** das Element in einem Winkel mit der Horizontalen, vorzugsweise in einem Winkel zwischen 2 bis 45°, besonders bevorzugt zwischen 5 bis 30°, vorgesehen ist.

16. Vorrichtung, die zum Abtrennen von Teilchen geeignet ist, die eine Dichte haben, die kleiner ist als die eines fluiden Mediums, wobei die Vorrichtung
- eine Abtrennkammer (1 ) mit einer Zuführöffnung (3) für die abzutrennenden Teilchen,
- ein Element (4), das über der Zuführöffnung vorgesehen ist, wobei das Element eine Vielzahl von Öffnungen aufweist, die den Durchlass der Teilchen zulassen, und
- Einrichtungen (5) aufweist, die vorgesehen sind, um das fluide Medium bezüglich der abzutrennenden Teilchen nach oben und nach unten zu bewegen,
**dadurch gekennzeichnet,**
- **dass** die Zuführöffnung (3) sich in einer im Wesentlichen radialen Richtung erstreckt, und
- **dass** zweite Einrichtungen vorgesehen sind, um das Element bezüglich des fluiden Mediums in der Abtrennkammer zu drehen.

17. Vorrichtung nach Anspruch 16, **dadurch gekennzeichnet, dass** sie Einrichtungen (12) zum lokalen Durcheinanderbringen einer Masse aufweist, die zugesetzte Teilchen, die nicht in der Lage sind, durch die Öffnungen des Elements hindurchzugehen, und spezielle Teilchen aufweist, die aus den Teilchen abgetrennt sind, die durch die Öffnungen des Elements hindurchgegangen sind.

18. Verfahren zum Abtrennen von Teilchen in einem fluiden Medium, das eine Dichte hat, die höher ist als die der abzutrennenden Teilchen,
**dadurch gekennzeichnet,**
- **dass** eine Vorrichtung nach Anspruch 16 verwendet wird,
- **dass** ein Gemisch von abzutrennenden Teilchen unter einer Schicht von Teilchen zugeführt wird, die eine Dicke haben, die es ihnen nicht erlaubt, durch die Öffnungen des Elements hindurchzugehen,
- **dass** das fluide Medium in der Abtrennkammer bezüglich des Elements gedreht wird, und
- **dass** das Element nach oben und unten bewegt wird, um das fluide Medium bezüglich der abzutrennenden Teilchen nach oben und nach unten zu bewegen und die Teilchen mit der geringeren Dichte dazu zu bringen, durch die erleichternden Teilchen und durch die Öffnungen in dem Element hindurchzugehen und in einem fluiden Medium über dem Element zu enden, von dem aus die Teilchen aus der Abtrennkammer abgeführt werden, während die erleichternden Teilchen als eine Sperre für die Teilchen mit höherer Dichte wirken und diese zurückhalten,
- wobei die Teilchen mit höherer Dichte aus der Abtrennung in dem fluiden Medium unter dem Element abgeführt werden.

19. Verfahren nach Anspruch 18, **dadurch gekennzeichnet, dass** das fluide Medium bezüglich der Wand der Abtrennkammer gedreht wird.

20. Verfahren zum Abtrennen von Teilchen in einem fluiden Medium, das eine Dichte hat, die höher ist, als die der abzutrennenden Teilchen,
**dadurch gekennzeichnet,**
- **dass** eine Vorrichtung nach Anspruch 17 verwendet wird,
- **dass** ein Gemisch von abzutrennenden Teilchen unter einer Schicht von Teilchen zugeführt wird, die eine Dicke haben, die es ihnen nicht erlaubt, durch die Öffnungen des Elements hindurchzugehen,
- **dass** das fluide Medium in der Abtrennkammer bezüglich des Elements gedreht wird,
- **dass** das Element nach oben und unten bewegt wird, um das fluide Medium bezüglich der abzutrennenden Teilchen zu bewegen, und die Teilchen mit der geringeren Dichte dazu bringen, durch die erleichternden Teilchen und durch die Öffnungen in dem Element hindurchzugehen und in einem ersten Abschnitt zu enden, der das fluide Medium über dem Element aufweist,
- wobei von dem ersten Abschnitt aus die Teilchen aus der Abtrennkammer abgeführt werden, während die erleichternden Teilchen als eine Sperre für die Teilchen mit höherer Dichte wirken und diese zurückhalten,
- wobei die Einrichtungen für ein lokales Durcheinanderbringen der Masse von erleichternden Teilchen und zurückgehaltenen Teilchen mit höherer Dichte es den Teilchen mit höherer Dichte erlauben, durch die Öffnungen in dem Element hindurchzugehen und in dem zweiten Abschnitt über dem Element zu enden, der von dem ersten Abschnitt getrennt ist, und
- wobei ein Strom, der mit Teilchen angereichert ist, die eine höhere Dichte haben, aus der Abtrennkammer abgeführt wird.

## Revendications

1. Procédé pour séparer des particules dans un agent fluide présentant une densité supérieure à celle des particules à séparer, dans lequel un mélange des particules à séparer est conduit dans une chambre de séparation d'un dispositif de séparation, et des courants enrichis en un type particulier de particules sont déchargés hors de la chambre de séparation, **caractérisé en ce que** le mélange de particules est soumis à un traitement comprenant l'étape consistant à remuer l'agent fluide de haut en bas par rapport au mélange de particules, dans lequel une barrière est présente au-dessus des particules afin de retenir les particules.

2. Procédé selon la revendication 1, **caractérisé en ce que** les particules à séparer sont des particules de plastique.

3. Procédé selon la revendication 2, **caractérisé en ce que** les particules de plastique à séparer sont des polyoléfines.

4. Procédé selon l'une quelconque des revendications précédentes, **caractérisé en ce que** l'agent fluide est un agent aqueux.

5. Procédé selon la revendication 4, **caractérisé en ce que** l'agent aqueux est l'eau.

6. Procédé selon la revendication 4 ou 5, **caractérisé en ce que** l'agent aqueux a une température d'environ 0°C.

7. Procédé selon l'une quelconque des revendications précédentes, **caractérisé en ce que** des particules de facilitation de la décharge à séparer sont présentes dans l'agent fluide.

8. Procédé selon la revendication 7, **caractérisé en ce que** les particules de facilitation sont des particules en vrac présentant une densité comprise entre les densités des courants enrichis en particules particulières.

9. Procédé selon l'une quelconque des revendications précédentes, **caractérisé en ce que** la barrière pour retenir les particules est un élément prévu dans la chambre de séparation.

10. Procédé selon l'une quelconque des revendications précédentes, **caractérisé en ce que** l'élément pour retenir les particules comprend des passages destinés à laisser passer l'agent fluide.

11. Procédé selon l'une quelconque des revendications précédentes, **caractérisé en ce que** l'élément est positionné de manière à former un angle avec le plan horizontal, de préférence un angle compris entre 2° et 45°, plus préférablement entre 5° et 30°, de telle sorte que les particules soient transportées à l'écart de leur lieu d'arrivée.

12. Dispositif permettant de séparer des particules présentant une densité inférieure à celle d'un agent fluide, le dispositif comprenant:
- une chambre de séparation (1) comportant une ouverture d'arrivée (3) des particules à séparer;
- des ouvertures de décharge (6, 7) pour des fractions séparées de particules;
- un élément (4) comportant des passages prévus au-dessus de l'ouverture d'arrivée, l'élément définissant une première partie de la chambre de séparation et une deuxième partie de la chambre de séparation;
- des moyens (5) pour remuer l'agent fluide de haut en bas par rapport aux particules à séparer,
**caractérisé en ce que** l'élément (4) est un élément de retenue de particules, et l'ouverture d'arrivée (3) et les ouvertures de décharge (6, 7) sont en communication directe les unes avec les autres par l'intermédiaire de la première partie.

13. Dispositif selon la revendication 12, **caractérisé en ce que** l'élément est positionné de manière à former un angle avec le plan horizontal, de préférence un angle compris entre 2° et 45°, plus préférablement entre 5° et 30°.

14. Dispositif permettant de séparer des particules présentant une densité inférieure à celle d'un agent fluide, le dispositif comprenant:
- une chambre de séparation (1) comportant une ouverture d'arrivée (3) des particules à séparer;
- des ouvertures de décharge pour des fractions séparées de particules;
- un élément (4) comportant des passages prévus au-dessus de l'ouverture d'arrivée, l'élément définissant une première partie de la chambre de séparation et une deuxième partie de la chambre de séparation;
- des moyens (5) pour remuer un agent fluide de haut en bas par rapport aux particules à séparer,
**caractérisé en ce que** l'élément (4) se compose d'une première section (4a) comportant des premiers passages et d'une deuxième section (4b) comprenant des seconds passages, les premiers passages étant plus petits que les seconds passages, la première section étant un élément de retenue de particules, une ouverture d'arrivée et une première ouverture de décharge étant en communication directe l'une avec l'autre par l'intermédiaire de la première partie, l'ouverture d'arrivée et une deuxième ouverture de décharge étant en communication l'une avec l'autre par l'intermédiaire de la première partie, de la deuxième section et de la deuxième partie.

15. Dispositif selon la revendication 14, **caractérisé en ce que** l'élément est positionné de manière à former un angle avec le plan horizontal, de préférence un angle compris entre 2° et 45°, plus préférablement entre 5° et 30°.

16. Dispositif permettant de séparer des particules présentant une densité inférieure à celle d'un agent fluide, le dispositif comprenant:
- une chambre de séparation (1) comportant une ouverture d'arrivée (3) des particules à séparer;
- un élément (4) prévu au-dessus de l'ouverture d'arrivée, ledit élément comportant une multitude d'ouvertures permettant le passage desdites particules; et
- des moyens (5) pour remuer l'agent fluide de haut en bas par rapport aux particules à séparer,
**caractérisé en ce que** ladite ouverture d'arrivée (3) s'étend dans une direction essentiellement radiale, et que des seconds moyens sont prévus pour faire tourner l'élément par rapport à l'agent fluide dans la chambre de séparation.

17. Dispositif selon la revendication 16, **caractérisé en ce qu'**il comprend des moyens (12) pour agiter localement une masse comprenant des particules ajoutées incapables de passer à travers les ouvertures dudit élément, et des particules particulières séparées des particules qui sont passées à travers lesdites ouvertures dudit élément.

18. Procédé pour séparer des particules dans un agent fluide présentant une densité supérieure à celle des particules à séparer, **caractérisé en ce qu'**un dispositif selon la revendication 16 est utilisé, un mélange de particules à séparer est introduit en dessous d'une couche de particules présentant une épaisseur qui ne leur permet pas de passer à travers les ouvertures de l'élément, l'agent fluide dans la chambre de séparation est mis en rotation par rapport à l'élément, l'élément est remué de haut en bas afin de déplacer l'agent fluide par rapport aux particules à séparer, entraînant les particules de densité moindre à passer à travers les particules de facilitation et à travers les ouvertures prévues dans ledit élément pour aboutir dans l'agent fluide au-dessus dudit élément à partir duquel les particules sont déchargées hors de la chambre de séparation, tandis que les particules de facilitation agissent comme une barrière pour retenir les particules à densité supérieure, lesdites particules présentant une densité supérieure étant déchargées hors de la chambre de séparation dans l'agent fluide en dessous dudit élément.

19. Procédé selon la revendication 18, **caractérisé en ce que** l'agent fluide est mis en rotation par rapport à la paroi de la chambre de séparation.

20. Procédé pour séparer des particules dans un agent fluide présentant une densité supérieure à celle des particules à séparer, **caractérisé en ce qu'**un dispositif selon la revendication 17 est utilisé, un mélange de particules à séparer est introduit en dessous d'une couche de particules présentant une épaisseur qui ne leur permet pas de passer à travers les ouvertures de l'élément, l'agent fluide dans la chambre de séparation est mis en rotation par rapport à l'élément, l'élément est remué de haut en bas afin de déplacer l'agent fluide par rapport aux particules à séparer, entraînant les particules à densité moindre à passer à travers les particules de facilitation et à travers les ouvertures dans ledit élément pour aboutir dans une première section comprenant un agent fluide au-dessus dudit élément, première section à partir de laquelle les particules sont déchargées hors de la chambre de séparation, tandis que les particules de facilitation agissent comme une barrière pour retenir les particules à densité supérieure, les moyens pour agiter localement la masse de particules de facilitation et de particules retenues à densité supérieure permettant auxdites particules à densité supérieure de passer à travers les ouvertures dans ledit élément pour aboutir dans une deuxième section au-dessus de l'élément séparée de la première section et déchargeant un courant enrichi en particules présentant une densité supérieure hors de la chambre de séparation.
